# NEUE EUROPÄISCHE PATENTSCHRIFT

(11) **EP 0 779 798 B2**
(45) Veröffentlichungstag und Bekanntmachung des Hinweises auf die Entscheidung über den Einspruch: **01.12.2004**
(45) Hinweis auf die Patenterteilung: 31.05.2000
(21) Anmeldenummer: 95932701.6
(22) Anmeldetag: 08.09.1995
(51) Int. Cl.: A61C 13/097

(54) **KÜNSTLICHER SEITENZAHN FÜR DAS MENSCHLICHE GEBISS**
ARTIFICIAL POSTERIOR TOOTH FOR HUMANS
DENT POSTERIEURE ARTIFICIELLE POUR DENTURE HUMAINE

(30) Priorität: 09.09.1994 DE 4432176
(43) Veröffentlichungstag der Anmeldung: 25.06.1997
(73) Patentinhaber: ID DENTAL INNOVATION SA, 1201 Genève (CH)
(72) Erfinder: Kura, Günter, 50127 Bergheim (DE); Homberg, Wilhelm, 42275 Wuppertal (DE)
(74) Vertreter: Zapf, Christoph, Dipl.-Ing.
(86) Internationale Anmeldenummer: PCT/EP1995/003550
(87) Internationale Veröffentlichungsnummer: WO 1996/007365

(56) Entgegenhaltungen:
- CH-A- 87 851
- US-A- 3 755 898
- US-A- 4 626 215
- Gnathologische Zahnpräparation, C.E. Stuart, Quintessenzverlag 1986
- Die Totalprothese, K. Fuhr und TH. Reiber, Urban & Schwarzenberg, 1993, S. 52
- Die Teilprothese: Diagnostik, Planung, Therapie, K. Fuhr, N. Behneke, Th. Reiber, ISBN 3-446-15658-5, 1990
- Erfahrungen mit Front-Eckzahn-kontrollierten Totalprothesen, Prof. Dr. med. K. Gausch, Carl Hanser Verlag 1986
- Totalprothesen Hrsg. L. Hupfauf, 3. Aufl., Verl. Urban & Schwarzenberg, 1991

## Beschreibung

Die vorliegende Erfindung betrifft ein künstliches Seitenzahn-Paar für herausnehmbare Prothesen, und zwar großer und kleiner Seitenzahn für den menschlichen Ober- und Unterkiefer, dessen okklusale Fläche mindestens einen bukkalen Höcker sowie mindestens einen palatinalen Höcker aufweist, zwischen denen in Längsrichtungdes Zahns eine Längsfissur verläuft, wobei der bukkale Höcker der Unterkiefer-Seitenzähne in die Längsfissur der Oberkiefer-Seitenzähne eingreift und der palatinale Höcker der Oberkiefer-Seitenzähne in die Längsfissur der Unterkiefer-Seitenzähne eingreift.

Derartige künstliche Seitenzähne sind bekannt. Bei den industriell gefertigen künstlichen Seitenzähnen ist die okklusale Fläche jedoch nur schwach ausgebildet und in der Schließstellung ist zwischen den aufeinanderliegenden Zähnen ein flächenförmiger Kontaktbereich vorhanden. Hierdurch ergibt sich eine stempelartige Wirkung der Zähne gegeneinander, woraus eine Haftung der Zähne beim Kauen resultiert. Diese Haftung zwischen den Zähnen führt zu schlechten Kaueigenschaften des aus den künstlichen Zähnen gebildeten Gebisses, wobei insbesondere das sogenannte "Gebißklappern" beim Kauen auftritt. Zudem ist bei den bekannten künstlichen, industriell gefertigten Zähnen keine einwandfreie Verschlüsselung derokklusalen Flächen gegeben. Hierdurch bedarf es immer einer manuellen Nachbearbeitung. Auch führt der flächenförmige Kontaktbereich in der Schließstellung der Zähne zu einer ungünstigen Belastung des Paradontiums.

Aus der US-A-46 26 215 sind punktförmige Kontaktzonen bekannt, die durch in den gegenüberliegenden Seitenzähnen des Ober- und Unterkiefers im Bereich der Kauflächen angeordnete Kugeln geschaffen werden. Die derartig hergestellten Zähne ermöglichen keine natürlichen Kaubewegungen.

Weiterhin ist es bei der Präparation von Zähnen aus der Literaturstelle "Gnathologische Zahnpräparation", C.E. Stuart, Quintessenz Verlags-GmbH, 1986, bekannt, einen Dreipunktkontakt zwischen den Höckern der jeweiligen Seitenzähne des Ober- und Unterkiefers auszubilden, um ein stabiles System in der Mechanik zu bilden. Bei einer Dreipunkt-Anordnung für den Oberkiefer sind die Punkte des Dreiecks beidseitig einer gedachten Längsachse des Seitenzahnes gewählt. Somit sind die Kontaktpunkte auf den Höckern selbst oder auf den Höckerflanken angeordnet. Die Präparation von Zähnen wird bei der Herstellung von festem nicht auswechselbarem Zahnersatz, beispielsweise bei Kronen, Brücken und dergleichen, die zementiert, implantiert oder verschraubt werden, angewendet.

Der vorliegenden Erfindung liegt die Aufgabe zugrunde, künstliche Seitenzähne für herausnehmbare Prothesen der eingangs beschriebenen Art dahingehend zu verbessern, daß die Kaueigenschaften und der Halt im eingesetzten Zustand verbessert werden und auch eine günstige Kraftverteilung im Paradontium erreicht wird. Darüber hinaus soll eine vereinfachte Ausrichtungder Zähne zur Herstellung des künstlichen Gebisses erzielt werden.

Die vorliegende Aufgabe wird durch die Merkmale des Anspruchs 1 gelöst. Durch die Herstellung eines punktförmigen Kontaktes in Verbindung mit der vorhandenen gefurchten Höckerstruktur wird eine Stempelwirkung vermieden, wodurch verbesserte Kaueigenschaften erreicht werden. Indem die Ruhezonen in der Längsachse der Zähne angeordnet sind, erfolgt auch die Krafteinleitung in der Längsachse, wodurch das Paradontium geschont wird. Bei den mit dem erfindungsgemäßen Zahnpaar hergestellten Prothesen wird somit die Dynamik gesteigert und der Kaumechanismus entspannt, da vorteilhafterweise die Ruhezonen weiträumig ausgebildet sind. Weiterhin ist es erfindungsgemäß vorteilhaft, daß in der okklusalen Fläche der Zähne jeweils eine oder mehrere Speiseabflußrillen ausgebildet sind, die über den Rand des jeweiligen Zahnkörpers nach außen geführt sind. Hierbei ist es besonders zweckmäßig, wenn die Speiseabflußrillen in den Ruhezonen an deren tiefsten Stelle beginnen. Derartige Speiseabflußrillen sind bei den bekannten künstlichen Zähnen nicht vorhanden, vielmehr weisen diese lediglich angedeutete Rillen auf, die nicht geeignet sind, den beim Kauen entstehenden Speisebrei nach außen abzuführen. Durch die erfindungsgemäß vorgesehenen Speiseabflußrillen wird ein gleichmäßiges Auflösen der Speisen erreicht und es entsteht kein Stau und keine Instabilität. Zudem wird hierdurch das Paradontium geschont. Weiterhin kann es erfindungsgemäß von Vorteil sein, wenn an den gegenüberliegenden Seitenflächen der Seitenzähne Formschlußelemente ausgebildet sind, die formschlüssig mit den jeweils gegenüberliegenden Formschlußelementen des Nachbarzahns korrespondieren. Hierdurch wird eine Verschlüsselung der Seitenzähne zueinander bewirkt, die es ermöglicht, den aus künstlichen Seitenzähnen bestehenden Unter- oder Oberkiefer leichter aufzubauen bei der Gebißherstellung. Zudem erfolgt hierdurch eine eindeutige Zuordnung und eine genaue Ausrichtung der Zähne zueinander. Zudem dienen die Verschlüsselungselemente zur gegenseitigen Abstützung und Kraftübertragung.

Durch die erfindungsgemäße Kauflächengestaltung ist es möglich, die Seitenzähne mit ihrer Verzahnung mehrfach zu nutzen. Das erfindungsgemäße Kauflächenrelief läßt es zu, daß die Funktion der Seitenzähne mit ihren Höckern, Ruhezonen und Speiseabflußrillen eine Einheit bilden. Aus diesem System heraus ist das erfindungsgemäße Zahnpaar multifunktionell einsetzbar. Dabei läßt es das erfindungsgemäße Konzept zu, daß beim Ineinandergreifen der Zähne diese einzeln zueinander okkludieren oder jeweils mit zwei Zähnen okkludieren.

Vorteilhafte Ausführungen der Erfindung sind in den Unteransprüchen enthalten. Anhand der in den beiliegenden Zeichnungen dargestellten Ausführungsbeispiele wird die Erfindung näher erläutert. Es zeigen:
- Fig. 1: eine Aufsicht auf die okklusale Fläche der Seitenzähne des Oberkiefers,
- Fig. 2: eine Aufsicht auf die okklusale Fläche der Seitenzähne des Unterkiefers,
- Fig. 3: eine Bukkalansicht der Zähne gemäß Fig. 1,
- Fig. 4: eine palatinale Ansicht der Seitenzähne gemäß Fig. 1,
- Fig. 5: eine Lingualansicht der Seitenzähne gemäß Fig. 2,
- Fig. 6: eine Bukkalansicht der Seitenzähne gemäß Fig. 2,
- Fig. 7: eine Lingualansicht der Seitenzähne gemäß Fig. 1 und Fig. 2 in der Schließstellung gemäß einer erfindungsgemäßen Anordnung,
- Fig. 8: eine Lingualansicht der Seitenzähne gemäß Fig. 1 und Fig. 2 in einer zweiten erfindungsgemäßen Anordnung,
- Fig. 9: einen Schnitt durch einen Seitenzahn (24) im Bereich der Ruhezonen und
- Fig. 10: eine Ansicht auf einen Ruhezonenbereich.

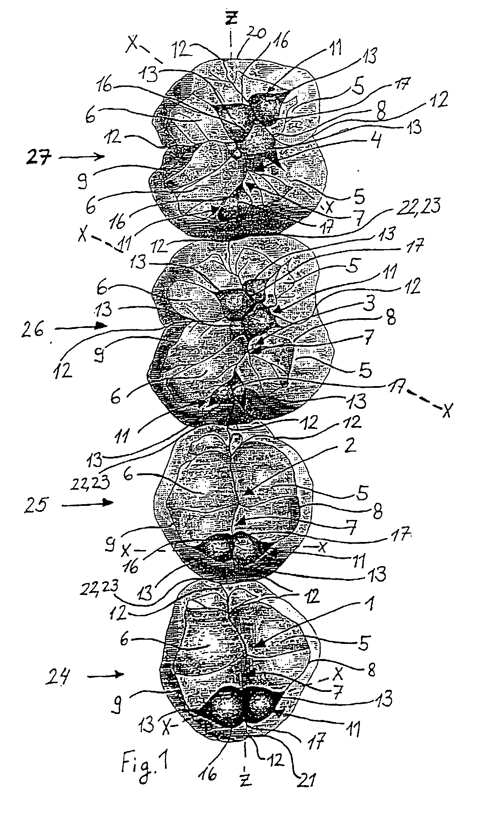

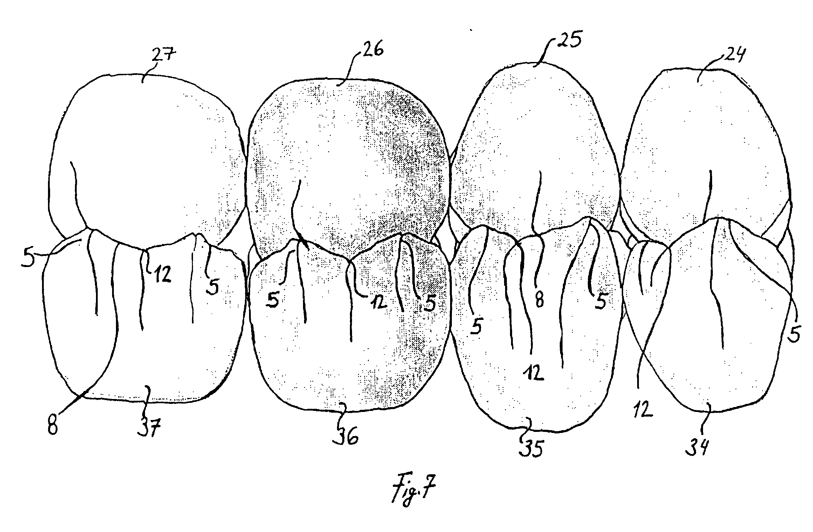

In Fig. 1 ist die Draufsicht auf die kleinen und großen Seitenzähne des Oberkiefers im zweiten Quadranten, das sind die kleinen Seitenzähne 24, 25 und die großen Seitenzähne 26, 27 des Oberkiefers, dargestellt. Die angegebenen Numerierungen entsprechen denjenigen Numerierungen, wie sie in der Zahntechnik für die Numerierung der Zähne des Oberbzw. Unterkiefers üblich sind. Somit ist in dieser Fig. 1 jeweils die okklusale Fläche jedes einzelnen Zahns zu erkennen. Jeder der großen und kleinen Seitenzähne weist in seiner okklusalen Fläche 1, 2, 3, 4 mindestens einen bzw. zwei palatinale Höcker 5 und mindestens einen bzw. zwei bukkale Höcker 6 auf. Vorzugsweise besitzen die kleinen Seitenzähne 24, 25 je zwei Höcker 5, 6. Die großen Seitenzähne 26, 27 besitzen bukkal zwei etwa gleich große Höcker 6 und palatinal einen großen Höcker 5 mesial und einen kleineren Höcker 5 distal. Zwischen den palatinalen Höckern 5 und den bukkalen Höckern 6 ist eine Längsfissur (Furche) 7 ausgebildet. In der Fig. 1 ist mit der Bezugsziffer 8 der palatinale Zahn-Grat und mit der Bezugsziffer 9 der bukkale Zahn-Grat bezeichnet. Innerhalb der Längsfissur 7 in jedem der Zähne 24, 25, 26, 27 sind erfindungsgemäß Ruhezonen 11 ausgebildet. Diese Ruhezonen 11 zeichnen sich dadurch aus, daß in diesen die tragenden Höcker des Antagonisten (des Gegenzahns des Unterkiefers), das sind die bukkalen Höcker des Unterkiefers, siehe Fig. 6 mit Punktkontakt in der Schließstellung des Ober- und Unterkiefers, anliegen und im übrigen Bereich der okklusalen Flächen 1, 2, 3, 4 kein Berührungskontakt besteht.

Die Ruhezonen 11 weisen jeweils mehrere Kontaktbereiche 13 auf, wobei in jedem Kontaktbereich ein Punktkontakt auf den Höckern des Antagonisten in der Schließstellung vorhanden sein kann. Die Kontaktbereiche 13 haben etwa die Umrißkontur einer Zwiebel, d.h. sie besitzen einen bauchigen Zentralbereich 14, dem sich ein spitz auslaufender Kopfbereich 15 anschließt. Die Oberfläche der Kontaktbereiche 13 ist toroidförmig ausgebildet, wobei im Schnitt gesehen sowohl in der Längsrichtung X-X als auch in der hierzu senkrechten Y-Y Richtung eine konvexe Schnittkontur ausgebildet ist. In Fig. 9 ist ein einzelner Kontaktbereich dargestellt. Die Kontaktbereiche 13 stoßen mit der Basis 16 des Zentralbereichs 14 aneinander, so daß sich zwischen ihnen Fissuren 17 ausbilden, die zum Zahnrand hin auslaufen.

Somit finden die tragenden Höcker des Antagonisten in der Ruhezone weiträumig Halt, d.h. um den punktförmigen Kontaktbereich ist entsprechendes Spiel vorhanden. Hierdurch wird der gesamte Kaumechanismus entspannt und es wird hierdurch bei allen Exkursionen des Unterkiefers im Bereich der Seitenzähne eine hinreichende Freiheit bewirkt. Um diesen punktförmigen Kontakt zu gewährleisten ist erfindungsgemäß ein gefurchter Höckeraufbau vorhanden, wobei die Hökker konvex geformt sind. Wie sich aus Fig. 1 ergibt, sind diese Ruhezonen 11 in den einzelnen Seitenzähnen 24 bis 27 unterschiedlich hinsichtlich der Größe und der Lage ausgebildet. Bei den beiden kleinen Seitenzähnen 24, 25 ist jeweils lediglich eine Ruhezone 11 vorgesehen, die vorzugsweise im mesialen Grat-Bereich des Zahnes sich befindet. Diese Ruhezone 11 besteht aus zwei Kontaktbereichen 13, die derart angeordnet sind, daß die Längsachse X-X etwas senkrecht zur Längsfissur 7 verläuft. Die beiden großen Seitenzähne 26, 27 weisen zwei Ruhezonen 11 auf, die in Längsrichtung beabstandet sind, wobei eine kleinere Ruhezone 11 im mesialen Grat-Bereich liegt und eine größere Ruhezone 11 gegenüber dem Zahn-Zentrum distal versetzt ist. Hierbei besteht die größere Ruhezone 11 aus vier Kontaktbereichen 13, von denen drei etwa gleich groß und größer als der vierte Kontaktbereich sind. Die vier Kontaktbereiche 13 sind sternförmig angeordnet, wobei die Längsachsen X-X der beiden jeweils einander gegenüberliegenden Kontaktbereichen 13 schräg zur Längsfissur 7 verlaufen, und der kleinere Kontaktbereich 13 etwa in dem Zahnzentrum liegt. Die kleine Ruhezone 11 besteht aus zwei Kontaktbereichen 13, die etwa entsprechend derjenigen der Prämolaren angeordnet sind, jedoch gegenüber diesen kleinere Abmessungen besitzen. Die kleineren Ruhezonen 11 besitzen etwa eine Breite von etwa 0,17 cm und die größeren Ruhezonen 11 etwa eine Breite von etwa 0,24 cm.

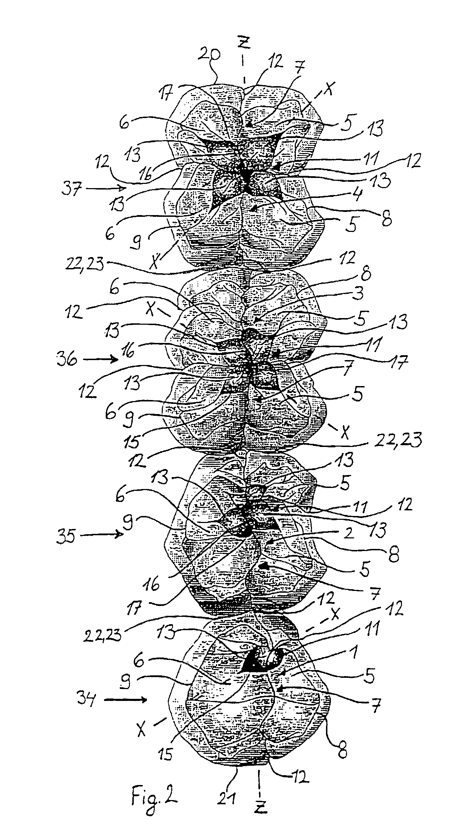

In Fig. 2 sind die kleinen Seitenzähne 34, 35 und die großen Seitenzähne 36, 37 im dritten Quadranten des menschlichen Unterkiefers dargestellt, wobei auch hier wiederum die Numerierung der Zähne der in der Zahntechnik üblichen Numerierung der Zähne des Unterkiefers entspricht. In Fig. 2 sind gleiche Zahnmerkmale wie in Fig. 1 mit denselben Bezugsziffern versehen. Wie bereits ausgeführt, bilden hier bei den Zähnen 34 bis 37 des Unterkiefers die bukkalen Höcker 6 die okklusionsfixierenden Höcker und greifen in die Längsfissur 7 der jeweiligen Antagonisten des Oberkiefers ein. Demgegenüber greifen die okklusionsfixierenden palatinalen Höcker 5 der Oberkieferzähne 24 bis 27 in die Längsfissur 7 ihres jeweiligen Antagonisten im Unterkiefer.

Wie aus Fig. 2 ersichtlich ist, ist in den Zähnen 34 bis 37 des Unterkiefers jeweils eine Ruhezone 11 ausgebildet. Dabei befinden sich die Ruhezonen 11 in den kleinen Seitenzähnen 34, 35 im distalen Bereich, wohingegen die Ruhezonen 11 in den großen Seitenzähnen 36, 37 etwa im Zahnzentrum in der okklusalen Fläche der Zähne 36, 37 ausgebildet sind. Auch bei den Zähnen 34 bis 37 des Unterkiefers sind die lingualen Höcker 5 und die bukkalen Höcker 6 konvex ausgebildet. Der Flankenwinkel der Höcker 5, 6 beträgt dabei 20 bis 30°, so daß ein punktförmiger Kontakt im jeweiligen Antagonisten im Bereich der Längsfissur 7 und dort in den jeweiligen Kontaktbereichen 13 gewährleistet wird.

Die kleinen Seitenzähne 34, 35 sind vorzugsweise derart ausgebildet, daß der Seitenzahn 34 zwei Höcker 5, 6 aufweist, und der Seitenzahn 35 drei Höcker aufweist, und zwar einen bukkalen Höcker 6 und zwei linguale Höcker 5. Die Ruhezone 11 des Seitenzahns 34 besteht aus einem Kontaktbereich 13 im distalen Kauflächenbereich, wobei der Kopfbereich 15 in Richtung bukkal weist. Der Seitenzahn 35 besitzt eine Ruhezone 11 aus vier etwa sternförmig angeordneten Kontaktbereichen 13, und zwar zwei kleineren distal nebeneinanderliegenden, die mit ihrer Basis 16 jeweils an der Basis 16 zwei größerer Kontaktbereiche anliegen, deren Kopfbereich 15 etwa bukkal bzw. lingual gerichtet ist, was auch für die Kopfbereiche 15 der kleineren Kontaktbereiche 13 gilt. Die großen Seitenzähne 36, 37 besitzen bukkal zwei etwa gleich große Höcker 6 oder drei unterschiedlich große und lingual zwei gleich große oder unterschiedlich große Höcker 5. Die Ruhezonen 11 beider Seitenzähnen 36, 37 sind etwa im Zahnzentrum angeordnet, wobei die vier Kontaktbereiche 13 etwa sternförmig angeordnet sind und deren Längsachsen X-X schräg zur Längsfissur 7 verlaufen.

Die Ruhezonen 11 sind jeweils etwa in der Zahnlängsachse Z-Z angeordnet. D.h. die Längsfissur 7 teilt jeweils die einzelnen Seitenzähne 24 bis 27 bzw. 34 bis 37 des Oberkiefers und Unterkiefers etwa mittig. Hierdurch wird ein gleichmässiger Kaudruck in der Zahnlängsachse erreicht, woraus eine bessere Dynamik beim Kauen resultiert und das Paradontium geschont wird.

Die Ruhezonen 11 haben im Bereich der Prämolaren eine Erstreckung sowohl in Längsrichtung als auch in Querrichtung von etwa 0,17 cm und im Bereich der Molaren besitzen sie eine maximale Erstreckung in Längs- und in Querrichtung von etwa 0,24 cm.

Weiterhin kann es ebenfalls zweckmäßig sein, wenn die Ruhezonen 11 derart ausgebildet sind, daß sie sich über den gesamten Bereich der Längsfissuren 7 in den einzelnen Zähnen 24 bis 27 und 34 bis 37 erstrecken. In diesem Fall sind die okklusionsfixierenden Höcker, d.h. die bukkalen Höcker 6 der Seitenzähne 34, 37 des Unterkiefers und die palatinalen Höcker 5 der Seitenzähne 24 bis 27 des Oberkiefers im Bereich ihrer Grate sattelförmig ausgebildet.

Eine weitere zweckmäßige Ausgestaltung der Erfindung besteht darin, wobei diese auch unabhängig von der in den Figuren 1 und 2 beschriebenen Ausbildung der Ruhezonen ist, daß im Bereich der jeweiligen Längsfissur 7 der einzelnen Zähne 24 bis 27 bzw. 34 bis 37 Abflußrillen 12 ausgebildet sind, die über den Rand des Zahnkörpers des jeweiligen Zahns nach außen geführt sind. Diese Abflußrillen 12 beginnen, sofern erfindungsgemäße Ruhezonen 11 vorhanden sind, an der tiefsten Stelle der jeweiligen Ruhezone 11. Diese Abflußrillen 12 sind im Querschnitt etwa V-förmig ausgebildet und besitzen in den Prämolaren 24, 25 und 34, 35 jeweils eine Tiefe von ca. 0,27 mm und in den Molaren 26, 27 und 36, 37 eine Tiefe von etwa 0,40 mm. Diese Tiefe ist insbesondere zu Beginn der Abflußrille 12 im Bereich der Ruhezone vorhanden. Am Ende der Abflußrille 12 im Wandbereich des Zahnkörpers läuft die Abflußrille 12 auf eine Tiefe "0" aus. Wie aus den Figuren 1 und 2 ersichtlich ist, ist bei den kleinen Seitenzähnen (Prämolaren) 24, 25 bzw. 34, 35 jeweils minimal eine Abflußrille 12 derart ausgebildet, daß sie in der jeweiligen Ruhezone 11 beginnt und im lingualen bzw. palatinalen Wandbereich des Zahnkörpers ausläuft, sowie aus der Längsfissur 7 jeweils eine Abflußrille 12 in den Wandbereich der beiden Seitenflächen ausläuft. Bei den großen Seitenzähnen (Molaren) 36, 37 bzw. 26, 27 sind minimal zwei Abflußrillen 12 vorgesehen, wobei die eine in der palatinalen/lingualen Wand und die andere in der bukkalen Wand des jeweiligen Zahnkörpers ausläuft, sowie aus der Längsfissur 7 jeweils eine Abflußrille 12 in den Wandbereich der beiden Seitenflächen ausläuft. Durch die erfindungsgemäßen Abflußrillen 12 wird sichergestellt, daß die auf den Kauflächen zerkleinerten Speisen aus der Kaufläche heraus in der Schließstellung der Zähne herausgedrückt werden, so daß der Speisebrei abfließen kann und somit eine durch den Speisebrei verursachte gegenseitige Haftung der Zähne im Bereich ihrer Kauflächen vermieden wird. Zudem wird ein Speisenstau verhindert und somit Instabilitäten vermieden.

Weiterhin ist aus den Figuren 1 und 2 zu erkennen, daß erfindungsgemäß vorgesehen sein kann, und zwar wiederum unabhängig von der Ausbildung der Ruhezonen 11 und der Speiseabflußrillen 12, daß an den Seitenflächen 20, 21 der einzelnen Zähne jeweils Formschlußelemente 22, 23 ausgebildet sind, die derart geformt sind, daß jeweils gegenüberliegende Formschlußelemente benachbarter Zähne formschlüssig insbesondere unter linearer Anlage miteinander korrespondieren. Hierbei kann es sich um konvexe Vorsprünge des einen Zahns und entsprechend angepaßte konkave Einbuchtungen des anderen Zahns handeln. Hierdurch wird eine Verschlüsselung der Zähne miteinander erreicht. Mittels dieser Verschlüsselung erfolgt eine Fluchtausrichtung der Zähne zueinander und gleichzeitig wird ein besserer Halt der Zähne gegeneinander bewirkt.

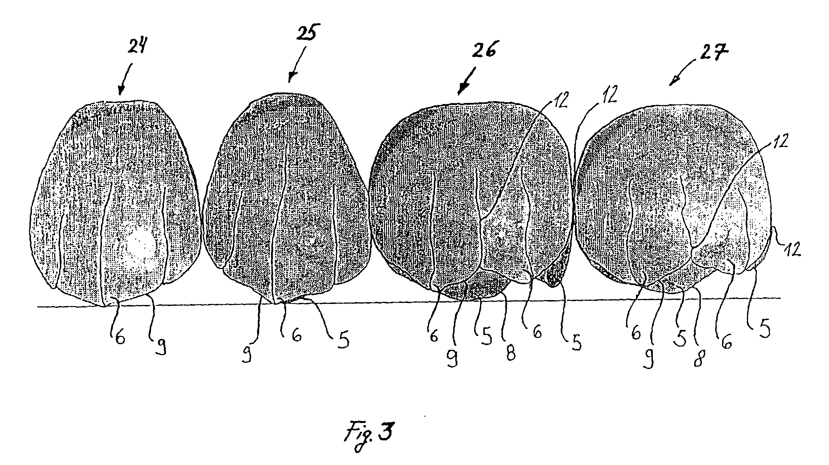

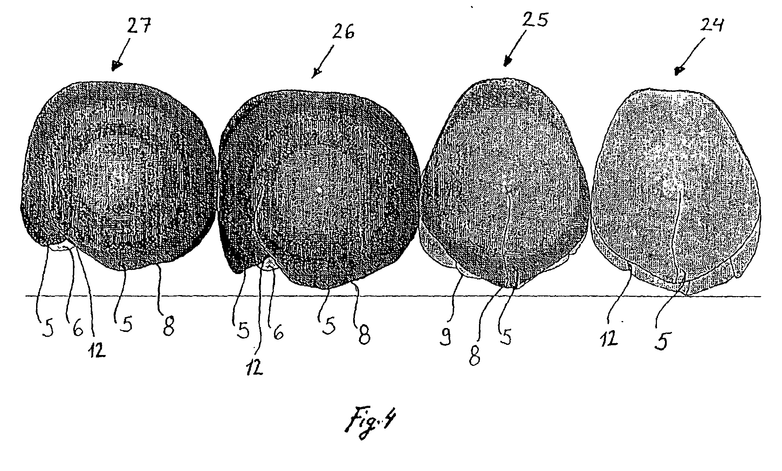

In Fig. 3 ist eine Bukkalansicht der Zähne 24 bis 27 dargestellt.

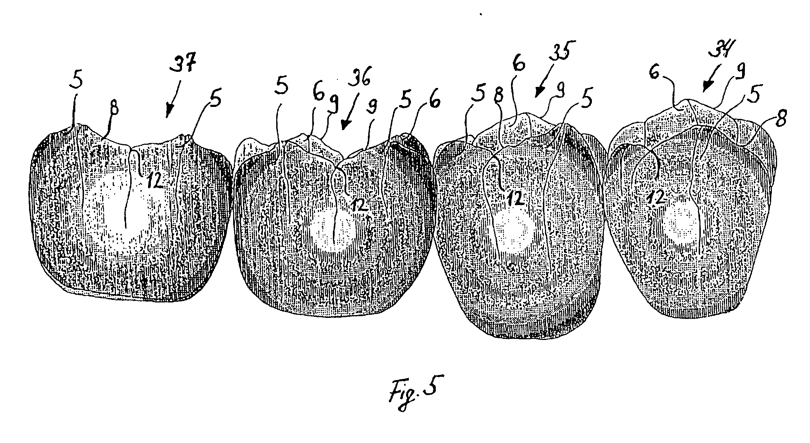

Fig. 4 zeigt die zur Bukkalansicht gemäß Fig. 3 gehörige Palatinalansicht der Zähne 24 bis 27. In diesen Figuren sind gleiche Zahnabschnitte wie in den Figuren 1 und 2 mit denselben Bezugsziffern versehen.

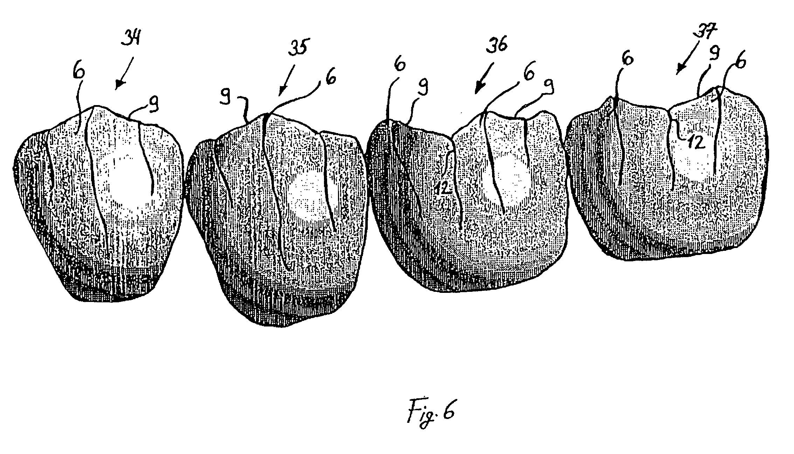

In Fig. 5 ist die Lingualansicht der Zähne 34 bis 37 dargestellt. Fig. 6 zeigt die hierzu gehörige Bukkalansicht der Zähne 34 bis 37, wobei wiederum gleiche Zahnabschnitte wie in Fig. 2 mit denselben Bezugsziffern versehen sind.

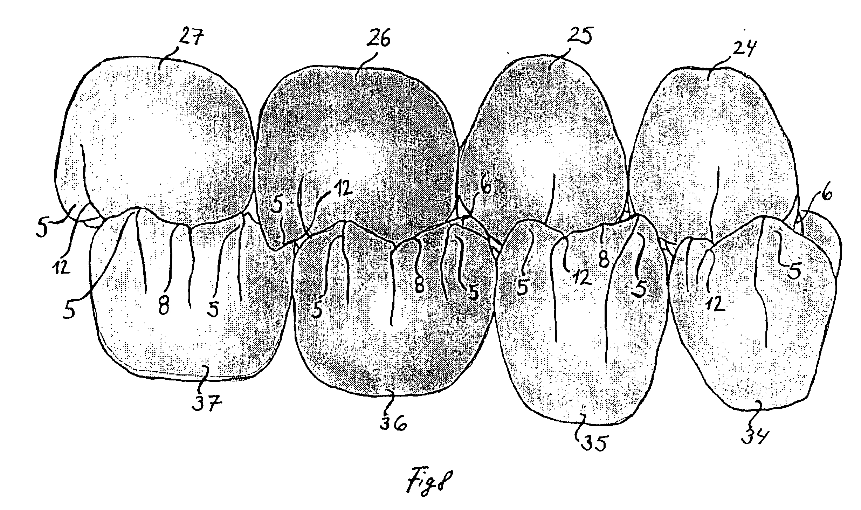

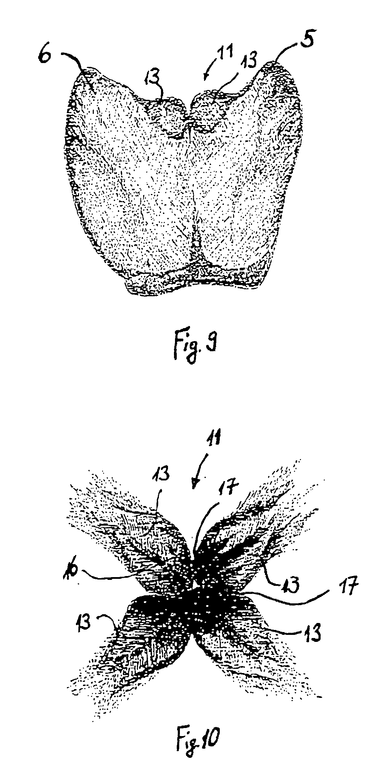

In Fig. 7 ist die Lingualansicht in der Schließstellung der Zähne 34 bis 37 und 24 bis 27 dargestellt. Hierbei ist zu erkennen, daß die Zähne in einer sogenannten ein-zu-ein-Zahn-Beziehung angeordnet sein können. In Fig. 8 ist ebenfalls die Lingualansicht der Zähne 24 bis 27 bzw. 34 bis 37 in der Schließstellung gezeigt. Hierbei ist jedoch eine sogenannte ein-zu-zwei-Zahn-Beziehung dargestellt. Durch die erfindungsgemäße Ausgestaltung der Okklusal-Flächen 1 bis 4 der kleinen und großen Seitenzähne ist es möglich, sowohl eine ein-zu-ein-Zahn-Beziehung als auch eine ein-zuzwei-Zahn-Beziehung aufzubauen.

## Patentansprüche

1. Künstliches Seitenzahn-Paar für herausnehmbare Prothesen, und zwar großer und kleiner Seitenzahn für den menschlichen Ober- und Unterkiefer, dessen okklusale Fläche mindestens einen bukkalen Höcker sowie mindestens einen palatinalen Höcker aufweist, zwischen denen in Längsrichtung des Zahns eine Längsfissur verläuft, wobei der bukkale Höcker der Unterkiefer-Seitenzähne in die Längsfissur der Oberkiefer-Seitenzähne eingreift und der palatinale Höcker der Oberkiefer-Seitenzähne in die Längsfissur der Unterkiefer-Seitenzähne eingreift,
**dadurch gekennzeichnet, dass** die Längsfissuren (7) und die palatinalen/lingualen Höcker (5) bzw. bukkalen Höcker (6) der Seitenzähne (34 bis 37 und 24 bis 27) derart aufeinander abgestimmt und ausgebildet sind, dass in den die Seitenzähne (24 bis 27, 34 bis 37) etwa mittig teilenden Längsfissuren (7) mindestens eine Ruhezone (11) in der jeweiligen mittleren Zahnlängsachse (Z - Z) mit einem oder mehreren Kontaktbereichen (13) ausgebildet ist, und die tragenden Höcker des jeweiligen Antagonisten mit Punktkontakt in der Schließstellung des Ober- und Unterkiefers an dem oder den Kontaktbereich/en (13) anliegen und im übrigen Bereich der okklusalen Flächen (1, 2, 3, 4) kein Berührungskontakt besteht und die palatinalen/lingualen Höcker (5) und die bukkalen Höcker (6) konvex ausgebildet sind und insbesondere einen Flankenwinkel von etwa 20 bis 30° besitzen und die Oberfläche der Kontaktbereiche (13) toroidförmig ausgebildet ist, wobei im Schnitt gesehen sowohl in der Langsrichtung (X-X) der Kontakbereich als auch in der hierzu senkrechten (Y-Y) Richtung eine konvexe Schnittkontur ausgebildet ist.

2. Künstliches Seitenzahn-Paar nach Anspruch 1,
**gekennzeichnet durch** eine Ausbildung als große Seitenzähne (26, 27) des Oberkiefers, wobei zwei in Längsrichtung der Seitenzähne (26, 27) beabstandete Ruhezonen (11) vorhanden sind, wobei die eine im distalen Bereich und die andere im mesialen Bereich ausgebildet ist.

3. Künstliches Seitenzahn-Paar nach Anspruch 1,
**gekennzeichnet durch** eine Ausbildung als kleine Seitenzähne (24, 25) des Oberkiefers, wobei eine Ruhezone (11) im mesialen Bereich ausgebildet ist.

4. Künstliches Seitenzahn-Paar nach Anspruch 1,
**gekennzeichnet durch** eine Ausbildung als große Seitenzähne (36, 37) des Unterkiefers, wobei eine Ruhezone (11) etwa im Zentrum der okklusalen Fläche (3, 4) ausgebildet ist.

5. Künstliches Seitenzahn-Paar nach Anspruch 1,
**gekennzeichnet durch** eine Ausbildung als kleine Seitenzähne (34, 35) des Unterkiefers, wobei eine Ruhezone (11) im distalen Bereich vorgesehen ist.

6. Künstliches Seitenzahn-Paar nach einem oder mehreren der Ansprüche 1-5,
**dadurch gekennzeichnet, dass** ausgehend von der Längsfissur (7) eine oder mehrere Speiseabflußrille/n (12) über den Rand des jeweiligen Zahnkörpers nach außen geführt sind.

7. Künstliches Seitenzahn-Paar nach Anspruch 6,
**dadurch gekennzeichnet, dass** die Speiseabflußrillen (12) in den Ruhezonen (11) an deren tiefsten Stelle beginnen.

8. Künstliches Seitenzahn-Paar nach Anspruch 7,
**dadurch gekennzeichnet, dass** die Speiseabflußrillen (12) im Querschnitt V-förmig sind und vorzugsweise eine Tiefe von 0,5 bis 0,7 mm zu Beginn in der Ruhezone (11) besitzen und zum Ende hin auslaufen.

9. Künstliches Seitenzahn-Paar nach einem oder mehreren der Ansprüche 1-9,
**dadurch gekennzeichnet, dass** an den gegenüberliegenden Seitenflächen (20, 21) der Seitenzähne (24 bis 27) bzw. (34 bis 37) Formschlußelemente (22, 23) ausgebildet sind, die formschlüssig mit ihren jeweils gegenüberliegenden Formschlußelementen des Nachbarzahns korrespondieren.

10. Künstliches Seitenzahn-Paar nach Anspruch 10,
**dadurch gekennzeichnet, dass** die Formschlußelemente (22, 23) konvex bzw. konkav ausgebildet sind.

## Claims

1. Artificial posterior tooth pairing for removable prostheses, namely a molar and a premolar for the human maxilla and mandible, the occlusal surface having at least one buccal cusp and at least one palatal cusp between which a long groove runs in the longitudinal direction of the tooth, the buccal cusp of the posterior teeth of the mandible engaging in the long groove of the posterior teeth of the maxilla, and the palatal cusp of the posterior teeth of the maxilla engaging in the long groove of the posterior teeth of the mandible, **characterized in that** the long grooves (7)and the palatal/lingual cusps (5) and buccal cusps (6) of the posterior teeth (34 to 37 and 24 to 27) are configured and adapted to each other in such a way that in the long grooves (7) dividing the posterior teeth (24 to 27, 34 to 37) approximately centrally , there is at least one rest zone (11) in the respective central longitudinal tooth axis (Z-Z) with one or more contact areas (13), and the supporting cusps of the respective antagonist tooth lie with punctiform contact on the contact area or areas (13) in the closure position of the maxilla and mandible and there is no contact in the remaining area of the occlusal surfaces (1,2,3,4), the palatal/ lingual cusps (5) and the buccal cusps (6) are of convex configuration and have in particular a flank angle of approximately 20 ° to 30° and the contact sections (13) having surfaces of toroid configuration and having cross sections of convex profile in both the longitudinal axis (X-X) of the contact sections and in direction (Y-Y) perpendicular to the axis (X-X).

2. Artificial posterior tooth pairing according to Claim 1, **characterized by** a configuration as molars (26,27) of the maxilla, in which two rest zones (11) are present at a distance from each other in the longitudinal direction of the posterior teeth (26,27), one being formed in the distal area and the other in the mesial area.

3. Artificial posterior tooth pairing according to Claim 1, **characterized by** a configurations as premolars (24,25) of the maxilla, in which a rest zone (11) is formed in the mesial area.

4. Artificial posterior tooth pairing according to Claim 1, **characterized by** a configuration as molars (36,37) of the mandible, in which a rest zone (11) is formed approximately in the centre of the occlusal surface (3,4).

5. Artificial posterior tooth pairing according to Claim 1, **characterized by** a configuration as premolars (34,35) of the mandible, in which a rest zone (11) is provided in the distal area.

6. Artificial posterior tooth pairing according to one or more of Claims 1 to 5, **characterized in that** one or more food outlet channels (12) extend outwards from the long groove (7) over the margin of the respective tooth body.

7. Artificial posterior tooth pairing according to Claim 6, **characterized in that** the food outlet channels (12) begin at the deepest point of the rest zones (11).

8. Artificial posterior tooth pairing according to Claim 7, **characterized in that** the food outlet channels (12) are V-shaped in cross section and preferably have a depth of 0.5 to 0.7 mm at their start in the rest zone (11) and run out towards the end.

9. Artificial posterior tooth pairing according to one or more of Claims 1 to 8, **characterized in that** form closure elements (22,23) are formed on the opposite side faces (20,21) of the posterior teeth (24 to 27) and (34 to 37), which form closure elements (22,23) correspond with their respective opposite form closure elements of the adjacent tooth.

10. Artificial posterior tooth pairing according to Claim 9, **characterized in that** the form closure elements (22,23) are of convex or concave configuration.

## Revendications

1. Paire de dents postérieures artificielles, pour prothèses extractibles, et plus précisément grande dent postérieure et petite dent postérieure pour le maxillaire supérieure et le maxillaire inférieur humains, dont la surface occlusale comporte au moins une cuspide vestibulaire, ainsi qu'au moins une cuspide palatale, entre lesquelles un sillon longitudinal court dans le sens longitudinal de la dent, la cuspide vestibulaire des dents postérieures du maxillaire inférieur entrant en prise avec le sillon longitudinal des dents postérieures du maxillaire supérieur, et la cuspide palatale des dents postérieures du maxillaire supérieur entrant en prise avec le sillon longitudinal des dents postérieures du maxillaire inférieure, **caractérisée en ce que** les sillons longitudinaux (7) et les cuspides palatales/linguales (5) ou les cuspides vestibulaires (6) des dents postérieures (34 à 37 et 24 à 27) sont adaptés les uns aux autres et configurés de telle sorte qu'au moins une zone de repos (11), dans l'axe longitudinal moyen de chacune des dents (Z-Z), avec une ou plusieurs zones de contact (13), soit réalisée dans le sillons longitudinaux (7), qui partagent approximativement en leur milieu les dents postérieures (24 à 27, 34 à 37), et les cuspides portantes de chacun des antagonistes s'appuient, avec un contact ponctuel, en position de fermeture du maxillaire supérieure et du maxillaire inférieure, contre la ou les zones de contact (13), aucun contact n'existant dans le reste des surfaces occlusales (1,2,3,4) et les cuspides palatales/linguales (5) et les cuspides vestibulaires (6) ont une configuration convexe et presentent en particulier une angle de flanc d'environ 20°à 30°et les sections de contact (13) ont une surface avec une forme toroidale et ont un profilé convexe en coup transversale aussi bien dans l'axe longitudinale (X-X) qu'en direction (Y-Y) perpendiculaire à l'axe (X-X).

2. Paire de dents postérieures artificielles selon la revendication 1, **caractérisée par** une configuration sous forme de grandes dents postérieures (26,27) du maxillaire supérieur, deux zones de repos (11) étant présentes à distance l'une de l'autre dans la direction longitudinale des dents postérieures (26,27), l'une étant réalisée dans la zone distale et l'autre dans la zone mésiale.

3. Paire de dents postérieures artificielles selon la revendication 1, **caractérisée par** une configuration sous forme de petites dents postérieures (24,25) du maxillaire supérieur, une zone de repos (11 ) étant réalisée dans la zone mésiale.

4. Paire de dents postérieures artificielles selon la revendication 1, **caractérisée par** une configuration sous forme de grandes dents postérieures (36,37) du maxillaire inférieur, une zone de repos (11) étant réalisée approximativement au centre de la surface occlusale (3,4).

5. Paire de dents postérieures artificielles selon la revendication 1, **caractérisée par** une configuration sous forme de petites dents postérieures (34,35) du maxillaire inférieur, une zone de repos étant prévue dans la zone distale.

6. Paire de dents postérieures artificielles selon l'une ou plusieurs des revendications 1 à 5, **caractérisée en ce que**, en partant du sillon longitudinal (7), un ou plusieurs sillons d'évacuation des aliments (12) courent vers l'extérieur en passant par le bord du corps de là dent correspondante.

7. Paire de dents postérieures artificielles selon la revendication 6, **caractérisée en ce que** les sillons d'évacuation des aliments (12) commencent, dans les zones de repos (11), en leur point le plus profond.

8. Paire de dents postérieures artificielles selon la revendication 7, **caractérisée en ce que** les sillons d'évacuation des aliments (12) ont en coupe transversale la forme d'un V, et ont de préférence en profondeur de 0,5 à 0,7 mm au début de la zone de repos (11), et se poursuivent jusqu'à son extrémité.

9. Paire de dents postérieures artificielles selon l'une ou plusieurs des revendications 1 à 8, **caractérisée en ce que** des éléments (22,23) à liaison avec correspondance de forme sont formés contre les surfaces latérales opposées (20,21) des dents postérieures (24 à 27) ou (34 à 37), éléments dont la forme correspond à celle des éléments opposés, à liaison avec correspondance de forme, de la dent voisine.

10. Paire de dents postérieures artificielles selon la revendication 9, **caractérisée en ce que** les éléments (22,23) à liaison avec correspondance de forme ont une structure convexe ou concave.
